# EUROPEAN PATENT APPLICATION

(11) **EP 3 521 051 A1**
(43) Date of publication of application: **07.08.2019**
(21) Application number: 18192407.7
(22) Date of filing: 04.09.2018
(51) Int. Cl.: B42D 3/12, B42D 1/00

(54) **BOOK WITH AUDIO OUTPUT**

(30) Priority: 31.01.2018 DE 202018100548 U
(71) Applicant: JAST Gifts (Shenzhen) Company Limited, KengZi Sub-district Office, Ping Shan New District GD 518122 Shenzhen City (CN)
(72) Inventor: CHEN, Jen-Lin, Cupertino, CA 95014 (US)
(74) Representative: Schneiders & Behrendt PartmbB Rechtsanwälte - Patentanwälte

(57) **Abstract**

The invention concerns a book with a front and a back book cover (2, 3), a spine, at least one book page (4), and an electronic system comprising first sensors (18) of suitable design so as to detect pressure exerted on a particular area of a book page (4), wherein a first sensor (18) when pressed being capable of triggering the reproduction of certain audio files, wherein the book pages (4) comprise individual, electronically detectable page indexes (8) and the electronic system of the book comprises at least one second sensor (20) capable of sensing the page index (8) of the opened page (4). By the invention a book that enables an as variable as possible selection of audio files is provided.

## Description

The invention relates to a book provided with audio output capability, in particular a book which has a digital audio output function that can be called up using pressure sensors.

Books into which a digital audio output function is integrated are known from the state of the art. The disadvantage of the such prior-art systems is that the implemented technology is sometimes complex and prone to failure. Moreover, the prior-art technology is limited in that only a limited number of audio files can be activated/triggered by a limited number of existing pressure sensors.

Books provided with audio output capability function in such a way that a number of pressure sensors are embedded particularly in the back cover of the book, which are suitable for playing back a certain audio file each time pressure is exerted on them. The number of sensors arranged in the back cover of the book is limited due to space restrictions. Due to the fact that each sensor can play only one file at a time, the number of audio files that can be activated for the entire book via a sensor depends on the number of sensors implemented.

It would be desirable to increase the number of audio files that can be activated without having to increase the number of sensors implemented.

It is therefore the objective of the present invention to provide a book with audio output that enables an as variable as possible selection of audio files to be achieved via the sensors that are implemented in the book.

It is moreover the objective of the invention to provide a book with audio output that enables different audio files to be played back via the same sensor.

Additionally, it is the objective of the invention to provide a book provided with a low-cost and less interference-prone audio output and recording function.

This objective is achieved by an invention that includes the characteristics described against claim 1. Advantageous embodiments in each case are the subject of the dependent claims. It is to be noted that any features individually included in the claims may also be combined with each other in an optional and technologically sensible manner so that they indicate further implementations or methods of the invention.

A book proposed by the invention comprises a front and a back cover, a spine, at least one book page and an electronic system with sensors capable of sensing the pressure exerted on a certain area of a book page, with such pressure being exerted on a sensor causing the reproduction of certain audio files to be triggered/activated. Furthermore, the pages of an inventive book comprise individual, electronically recordable page indexes and an electronic system with a sensor that is capable of capturing the page index of the page that has been opened.

Except for the page indexes, which are of course provided on the respective pages, the electronic components of the book in accordance with the invention are arranged in the front and/or back cover of the book. In the event that components of the electronic system are arranged in both the front and back covers, these components can be interconnected through the spine of the book.

In the case that electronic components are to be affixed to one of the book pages or one of the book covers, the respective book page or cover preferably comprises three layers arranged one above the other. The first layer corresponds to the front side of the book page or book cover and the third layer corresponds to the rear side of the book page or book cover. The second or middle layer is preferably arranged appropriately fitting at the sides between the first and the third layer and is provided with cutouts for the electronic components to be embedded. As necessitated by the electronic components to be embedded, the size of the cutouts and also the thickness of the material of the second layer must be appropriately chosen.

The electronic components to be implemented in the book pages essentially comprises the page indexes. However, depending on the technology employed, it is conceivable that the book pages may only be of a two-layer design and do not contain a middle layer, especially if the technology used as a page index is very thin and appears to make an additional layer with cutouts unnecessary. A conceivable technology for the page indexes comprises conductive or ferromagnetic parts.

Moreover, part of the implemented electronic system are the first sensors, especially capacitive pressure and/or touch sensors that are located in the front and/or back book cover. Within the meaning of the present invention, the terms "touch sensor" and "pressure sensor" are used synonymously for these first sensors. The important thing here is that the first sensor is suitable for detecting a certain pressure or a certain touch the user exerts or applies. In this respect, the terms "pressure" and "touch" as well as "press" and "touch" are considered to be equivalent within the meaning of the invention. All that is important here is that the respective first sensor can be triggered by an appropriate action.

Now, if the user of the book presses on a certain spot on an opened page of the book, then a first sensor located at a corresponding place in the book cover takes up this pressure and causes a sound assigned to this first sensor to be emitted. For the purposes of the present invention, all possible sounds such as speech, music, chimes, noises etc. are referred to hereunder as audio files.

The electronic system of the inventive book also includes a circuit provided with a second sensor that is capable of capturing an individual page index arranged on each page. In this way and depending on the page that has been opened, a different audio file can be played back each time via and by activating the same touch sensor. The relevant audio file is determined, so to speak, by a matrix (#page index/#touch sensor). In comparable books of prior-art technology, each touch sensor was assigned only one audio file at a time, so that exerting pressure on the same area of the book always resulted in the same audio output to be produced on each page. Accordingly, the potential and options of this technology have been very limited.

Each page of the book proposed by the invention, for which a selection of at least one audio file is intended, is provided with such a page index that can be read or detected by the electronic system of the book. This page index is preferably embedded in the second layer of the book page. In the event that the dimensions of the component used as a page index do not require a middle (second) layer with cutouts, the page index may also be simply inserted between the two layers. According to this variant, the relevant book pages would only consist of two layers.

The electronic system of the book thus comprises at least one main processor which is connected to at least one loudspeaker, the power supply, the memory, at least one touch sensor, one first switching circuit for processing the at least one touch sensor and one second switching circuit with a second sensor for the detection of the page indexes.

The electronic system of the book, in particular the second sensor, detects by means of the page index which page of the book has just been opened. Preferably, the book's electronic system will also detect when the book has been closed and switch over into an energy-saving standby mode when the book is closed. By opening the book, the electronic system is then switched back to an activity mode.

In a preferred embodiment of the book proposed by the invention, the electronic system thus comprises one main processor which is connected to at least one loudspeaker, at least one microphone, at least one switch, the power supply, the memory, at least one touch sensor, one first switching circuit for processing the at least one touch sensor and one second switching circuit with a second sensor for the detection of the page indexes.

When the book is opened, the second switching circuit passes on the page index detected by the second sensor to the main processor. The second sensor is preferably an inductive sensor, and, accordingly, the page indexes are preferably conductive or ferromagnetic components. When a pressure sensor is now actuated, the main processor triggers the playback of the corresponding audio file based on the page that has been opened. Depending on the mode that has been selected via the switch, the audio file (or several audio files) associated with this page is now, for example, automatically played back or the user may manually call up individual audio files via the page's touch fields or the pressure sensors physically located behind. To do this, the user presses one of the fields provided on the opened page and in this way activates the respective touch sensor arranged in the relevant book cover. The connected first switching circuit transmits the information about which sensor was triggered to the main processor that controls the playback of the audio file stored for this sensor on this page. Accordingly, at least one audio file can thus be created for each combination of page number and sensor. Which audio file is played back does not solely depend, therefore, on the activated first pressure sensor, but in particular is governed by the combination of the page index of the opened page registered by the second sensor and the activated first pressure sensor.

The audio files are stored in an internal memory. The audio files can be provided in permanently stored state, but may also be newly created by the user as a further embodiment of the invention. New audio files may thus be loaded or entered into the book's internal memory via an optional interface and/or via an optional microphone. The optional interface is of suitable design for the purpose of communicating wired and/or wirelessly with an external system, such as a computer, a smartphone, a tablet or another system, and to read in and/or transmit audio files of different formats. The recording time and the number of audio files that can be stored depends solely on the built-in memory and software applications.

Playing back the audio files stored with relation to the respective page can be performed automatically or manually by the user.

Automated in this context means that all or only the audio files intended for automatic playback and stored in relation to this page will be played back as soon as this page is opened. Such an automated mode of playback cannot be influenced by the user to the extent that the audio files intended for automatic reproduction are played back beyond external control, i.e. without the user being able to make a specific selection. This may be useful, for example, if the content of an opened page shall be read out automatically.

Manual mode means that the audio files stored in relation to a particular page are played back as soon as the user selects a specific spot on the opened page by touching or pressing it - depending on the type of sensor used - for example with his/her finger or another tool or accessory. In the "manual" operating setting, the electronic system recognizes a respective selection and plays back the audio file connected with this spot. For example, this may be useful if the content of an opened page shall be discovered little by little in a playful manner.

After all, different forms of mixing between the two operating modes "automatic" and "manual" are also conceivable, in which, for example, the audio file belonging to a certain page is only played back completely when the user selects it, or further audio files can be called up after the automated playback of an audio file when the page is opened via additional spots on the page that has already been opened. A wide variety of different operating modes are conceivable for those skilled in the art, all of which are ultimately based on the same invention concept.

Selecting an automated or a manual mode can be brought about via a switch. It is thus conceivable that a switch offers not only a simple On/Off function but also, for example, the On-manual, On-automatic and Off functions. In the case of a further embodiment of the invention that includes a recording function, another adjustable mode "recording" would be conceivable.

A split arrangement of the electronic system both on the front and on the back covers of the book is chosen by those skilled in the art according to the intended use or also according to various aspects of design. An advantage of an implementation of part of the electronic system, in particular the pressure sensors, in the front book cover is that by pressing on all pages of the book, a sensor can be triggered that causes an audio file to be played back. In the event that the respective sensors are exclusively arranged in the back cover of the book, it goes without saying that sensors can only be triggered by exerting pressure on the right pages of the book, since the front cover is located underneath the left book pages where no relevant sensors are arranged, since these are only implemented in the back cover underneath the right-hand pages of the book. The same applies analogously, of course, if pressure sensors are exclusively arranged in the front cover of the book.

According to a further embodiment of the invention, the user can create his or her own audio files by making use of the optional microphone. It is also conceivable that such self-created audio files are laid out similar to an audio book. It is likewise conceivable that contents of such a book could be recorded by a parent, a friend, etc. with the book thus becoming an automated talking/reading book. It is furthermore conceivable to create inventive embodiments of the book with blank pages, in which individual blank pages or a completely empty book can serve as a template for one's own stories, which are painted or written on the pages and recorded as audio files.

Moreover, an interface can be provided for the wireless or wired communication (data transfer) of the book with external devices such as computers, smartphones, laptops, tablets, etc., by means of which audio files stored in the book can be exported or new audio files can be imported. An external management of the audio files is also conceivable, for example, via which a simple and well-organized solution for the assignment of individual audio files to specific sensors and page indexes is achieved.

In an alternative embodiment of the book proposed in accordance with the invention, it is conceivable that at least parts of the electronic system are arranged in an enclosure. This applies in particular to components that are arranged in the book covers in the embodiments described hereinbefore, such as batteries, loudspeakers, mainboard, microphone or switches. Of course, at least the pressure sensors are still to be arranged in the book cover, as they are to be activated by the user and accordingly shall not be arranged in the enclosure. Preferably, the enclosure is arranged inside the book on the front, resp. inner side of the back cover. As an alternative, it is also possible to arrange the enclosure internally on the back, resp. inner side of the front book cover. In any case, the enclosure must be adequately secured to the respective book cover. To suit the dimensions of the enclosure, it is considered expedient to cut at least part of the book pages to size in such a way that the cut book pages form a recess to accommodate the enclosure.

Compared to the state of the art, the inventive book offers the advantage that, in particular due to the automatic detection of the opened page, it enables a multiple allocation of the sensors with different audio files adapted to the respectively opened page. This enables a multitude of possibilities to link the pages of the book to audio files. Moreover, the proposed solution is cost-effective because it enables a wide range of playable audio material to be used without the need of having to install additional sensors. The expenditure for the implementation of page recognition/detection is significantly less costly than increasing the number of sensors. In addition, due to space restrictions the number of possible sensors is limited.

The invention as well as the technical environment are described hereunder in sufficient detail on the basis of the figures. It is to be noted that the figures show an especially preferred embodiment variant of the invention. However, the invention shall not be deemed as being limited to the embodiment variant shown. To the extent it is technically expedient, the invention comprises, in particular, any optional combinations of the technical features that are stated in the claims or in the description as being relevant to the invention.

Elucidation of the invention is provided by the following figures where
- Fig. 1: is a schematic view A of the front cover and B of the back cover of the book proposed by the invention,
- Fig. 2: shows a schematic view of the inventive book in partly opened state;
- Fig. 3: is a schematic view of the design of the front book cover of a book proposed by the invention,
- Fig. 4: is a schematic view of the design of the book pages of a book proposed by the invention,
- Fig. 5: is a schematic view of the design of the back cover of a book proposed by the invention,

- Fig. 6: is a schematic view of an alternative embodiment of the inventive book with an enclosure accommodating the essential electronic components,
- Fig. 7: shows the block diagram of the electronic system of a preferred embodiment of the book.

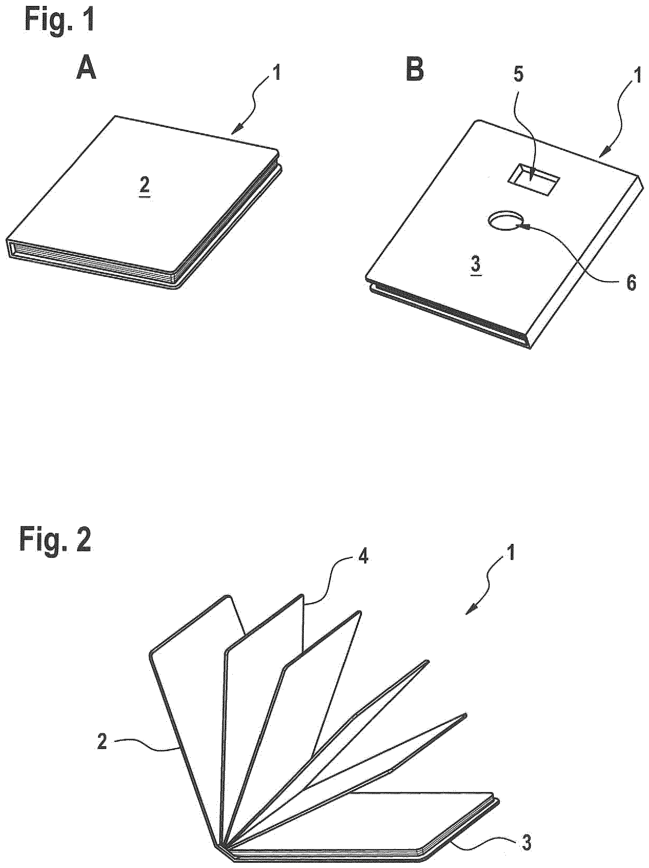

Fig. 1A shows a schematic view of the front side of the front book cover 2 of the inventive book 1 and Fig. 1B shows a schematic view of the rear of the back cover 3 of the book 1 proposed by the invention. Preferably, in the rear side of the back cover 3 access is provided to battery compartment 5 and openings 6 are arranged, especially for a loudspeaker or microphone to improve the acoustics.

The electronic system of the book 1 in accordance with the invention does not require a wired connection of book pages 4 with the electronic components located in the front and/or back cover 2, 3 and/or in the enclosure 13, since all the sensors, preferably capacitive pressure or touch sensors, required for controlling the audio output are arranged in the front or back cover 2, 3. The sensitivity of these sensors must be selected so as to be sufficiently high to enable the respective sensor located in the front or back book cover 2, 3 to be triggered through the touch or pressure exerted by the user on a contact surface of a book page, however, the sensors must not be triggered by the weight of the pages alone.
Fig. 2 shows a schematic view of book 1 proposed in accordance with the invention in the partially opened state with the front book cover 2, the back cover 3 and the pages 4 located between the front and back covers 2, 3 of the book. The external design of the inventive book 1 is basically no different from conventional books without audio function.

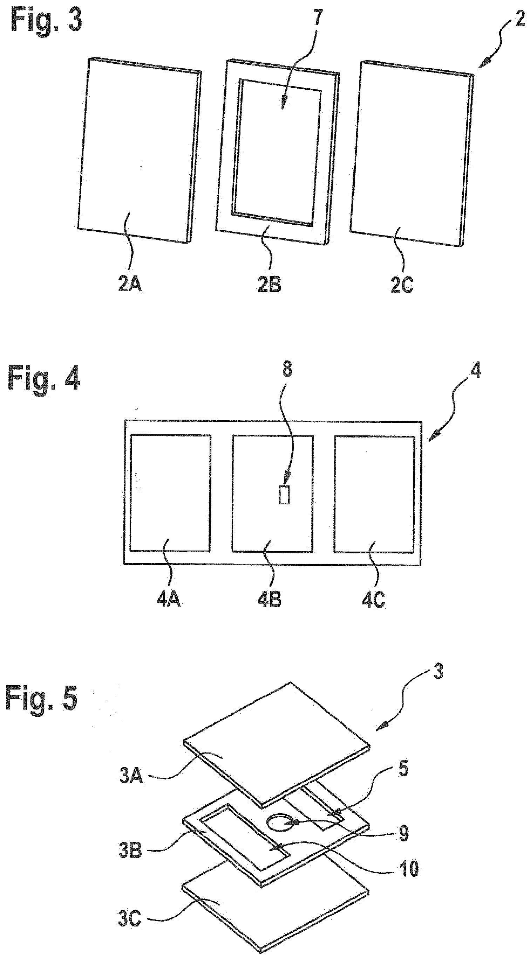

Fig. 3 shows a schematic view of the design of the front book cover 2 as a possible variant of book 1 proposed by the invention, with said book additionally including electronic elements arranged in the front book cover 2, in particular touch and pressure sensors. The front book cover 2 thus comprises a first layer 2A, a second layer 2B and a third layer 2C. The first and the third layer 2A, 2C correspond to the front and rear sides of the front book cover 2. The second layer 2B is arranged between the first and third layer 2A, 2C and is preferably attached permanently to them, for example, it is glued in place. The second layer 2B comprises one or more cutouts 7 in which various electronic components can be arranged, in particular sensors, preferably capacitive touch or pressure sensors, for activating the stored audio files. The number of the sensors is to be appropriately selected to suit the relevant application purpose of the book 1. At least one audio file can be assigned to each sensor of the front book cover 2 for each book page 4, said file being played back when appropriate pressure or touch is exerted or applied on the corresponding area of the opened page 4. The electronic components located in the front book cover 2 are connected via the spine to the electronic components arranged in the back cover 3 of the book.
Fig. 4 shows a schematic view of the structure of book pages 4 of a book 1 according to the invention with a first layer 4A, a second layer 4B and a third layer 4C. The first and third layers 4A, 4C of the book page correspond to the front and rear sides of the book page 4. The second layer 4B is arranged between the first and the third layer 4A, 4C and preferably permanently attached to these layers 4A, 4C, for example, it is glued in place. The second layer 4B comprises a page index 8, said index can be detected by a second sensor. This enables the electronic system of the book to recognize which page the user has just opened. After a certain page has been opened and depending on the selected mode, the predetermined audio file can be played back automatically or the user selects the desired audio files manually by pressing or touching individual areas of the page. The selection is registered by the book's electronic system and the relevant audio file that has been linked with the area on this page 4 is played back.
Fig. 5 shows a schematic view of the structure of the back cover 3 of the book of a preferred variant of book 1 proposed by the invention. The back cover 3 thus comprises a first layer 3A, a second layer 3B and a third layer 3C. The first and third layers 3A, 3C correspond to the front and rear sides of the back cover 3 of the book. The second layer 3B is arranged between the first and third layer 3A, 3C and is preferably attached permanently to them, for example, it is glued in place. The second layer 3B comprises one or more cutouts or recesses intended to accommodate various electronic components, in particular batteries 5 for power supply, loudspeaker 9, circuit boards 10 with elements for controlling and storing the audio files, etc. Additionally, a microphone for recording one's own audio files can be arranged here as well as memory elements, external interfaces for the wireless or wired communication or data transmission with external devices, switches for selecting certain operating modes such as On and Off or recording and playback, sensors for the detection of opened pages or further sensors for the activation or deactivation of the power consuming components. In particular, also the pressure sensors are arranged here, which are capable of detecting the pressure exerted by the user on the contact areas of the respective pages. The number and distribution/arrangement of these pressure sensors is determined by those skilled in the art to suit the intended use. Preferably, in the third layer 3C of the back cover 3 access is provided to battery compartment 5 and openings 6 are arranged, especially for a loudspeaker or microphone.

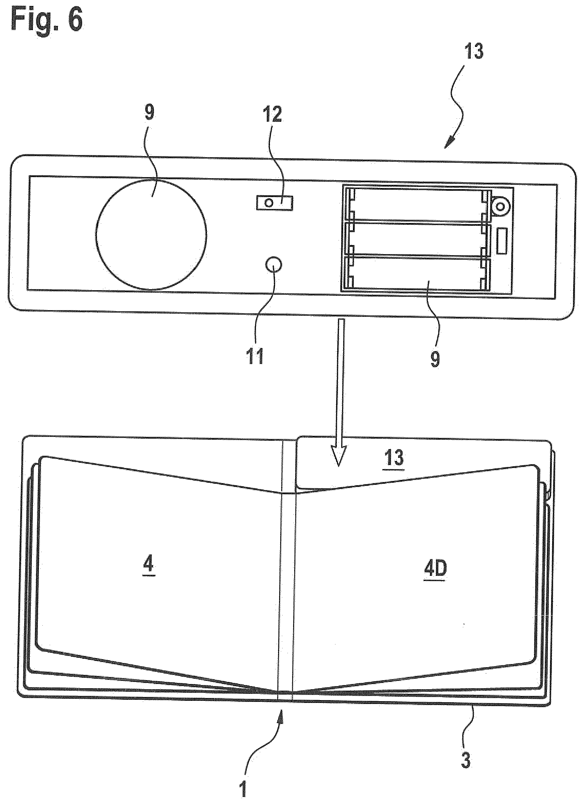

Fig. 6 shows a schematic view of an alternative embodiment of the book 1 the invention proposes, with an enclosure 13, said enclosure 13 being intended to accommodate at least some of the electronic components. This applies in particular to components that as per the embodiment described hereinbefore are arranged in the back cover 3 of the book, such as batteries 5, loudspeaker 9, mainboard 10, microphone 11 or switch 12. In particular, the pressure sensors are still to be arranged in the book cover 3 because they are to be activated by the user. The enclosure 13 is preferably arranged internally on the front side of the back cover 3 of the book. As an alternative, it is also possible to arrange the enclosure 13 internally on the rear side of the front cover 2 of the book. In any case, the enclosure 13 has to be sufficiently secured to the respective book cover 2, 3. To suit the size of the enclosure 13, at least part of the book pages 4 can be cut to size in such a way that the cut book pages 4D form a recess to accommodate the enclosure 13.

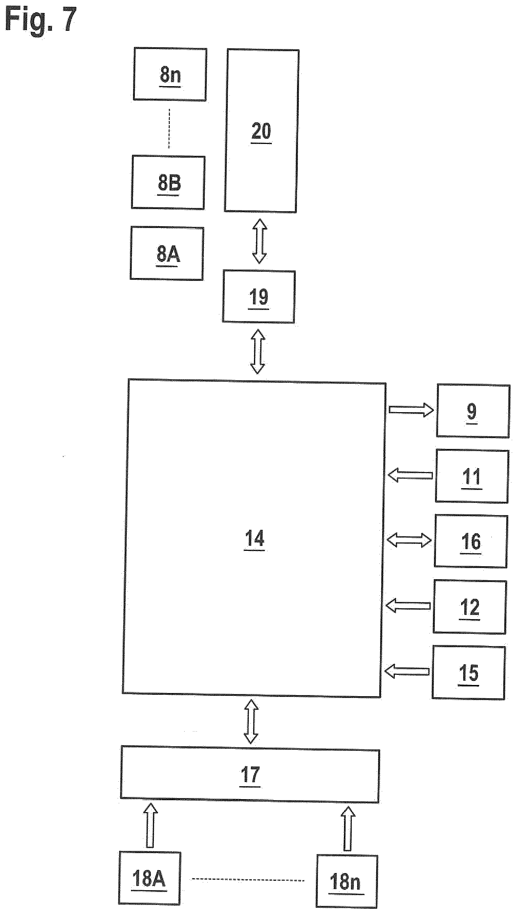

Fig. 7 shows the block diagram of the electronic system of a preferred embodiment of the inventive book. The main processor 14 is connected to a loudspeaker 9, a microphone 11, a switch 12, electrical power supply 15, memory 16, a first switching circuit 17 for processing the sensors 18 (A to n) and a second switching circuit 19 with a second sensor 20 for the detection of the page indexes 8 (A to n).

When the book is opened, the second switching circuit 19 passes on the page index 8 (A to n) detected by the second sensor 20 to the main processor 14. Preferably, the second sensor 20 is an inductive sensor, and, accordingly, the page indexes 8 are preferably conductive or ferromagnetic components. Depending on the mode that has been selected via the switch 12, the audio file (or several audio files) associated with this page is now, for example, automatically played back or the user may manually call up individual audio files via the page's contact/touch fields. To this end, the user presses the fields provided on the opened page and in this way activates the respective touch sensor underneath 18 (A to n) arranged in the book cover. The connected first switching circuit 17 transmits the information about which sensor 18 (A to n) was triggered to the main processor 14 that controls the playback of the audio file stored for this sensor 18 (A to n) on this page 8 (A to n). Accordingly, at least one audio file can be created for each combination of page index 8 (A to n) and sensor 18 (A to n). Therefore, which audio file is played at a time does not depend solely on the activated sensor 18 (A to n), but also on the combination of the page index 8 (A to n) of the opened page and the activated sensor 18 (A to n) in combination.

In a further embodiment of the invention, microphone 11 enables the user to create his or her own audio files for the individual sensors 18 (A to n) of the individual page indexes 8 (A to n). Likewise, an interface can be provided for the wireless or wired communication resp. data transfer of the book with external devices such as computers, smartphones, laptops, tablets, etc., via which the audio files stored in the book can be exported or new audio files can be imported. For example, an external management of the audio files is also conceivable, by means of which a simple and well-organized solution for the assignment of individual audio files to specific sensors 18 (A to n) and page indexes 8 (A to n) is achieved.

### List of Reference Numerals

- 1: Inventive book
- 2: Front book cover (A: first layer, B: second layer, C: third layer)
- 3: Back book cover (A: first layer, B: second layer, C: third layer)
- 4: Book page (A: first layer, B: second layer, C: third layer, D: cut to size)
- 5: Battery compartment
- 6: Openings
- 7: Cutout
- 8: Page index (A to n)
- 9: Loudspeaker
- 10: Mainboard
- 11: Microphone
- 12: Switch
- 13: Enclosure
- 14: Main processor
- 15: Electrical power supply
- 16: Memory
- 17: First switching circuit
- 18: First sensor, pressure sensor (A to n)
- 19: Second switching circuit
- 20: Second sensor, inductive sensor

## Claims

1. Book with a front and a back book cover (2, 3), a spine, at least one book page (4), and an electronic system comprising first sensors (18) of suitable design so as to detect pressure exerted on a particular area of a book page (4), wherein a first sensor (18) when pressed being capable of triggering the reproduction of certain audio files,
**characterized in that** the book pages (4) comprise individual, electronically detectable page indexes (8) and the electronic system of the book comprises at least one second sensor (20) capable of sensing the page index (8) of the opened page (4).

2. Book according to claim 1, **characterized in that** the first sensors (18) are capacitive pressure sensors.

3. Book according to claim 1 or 2, **characterized in that** the sensors (18) are arranged in the front and/or back cover (2, 3) of the book.

4. Book according to any one of the preceding claims, **characterized in that** the second sensor (20) is an inductive sensor and the page indexes (8) are conductive and/or ferromagnetic components.

5. Book according to any one of the preceding claims, **characterized in that** the assignment of an audio file is effected via a matrix comprising the page index (8) and the pressure sensor (18).

6. Book according to any one of the preceding claims, **characterized in that** the electronic system of the book (1) comprises at least one main processor (14) connected to at least one loudspeaker (9), an electrical power supply (15), a memory (16), a first switching circuit (17) for processing the first sensors (18 A to n) and a second switching circuit (19) with at least one second sensor (20) for the detection of the page indexes (8 A to n).

7. Book according to any one of the preceding claims, **characterized in that** the book (1) comprises a switch (12) and a microphone (11).

8. Book according to any one of the preceding claims, **characterized in that** the book (1) comprises a wireless and/or wired interface for communication and/or data transmission to external devices.

9. Book according to claims 5 and 7 or 8, **characterized in that** the audio files can be transferred via the microphone (11) or the interface into the memory (16) and are assignable to a matrix value derived from page index (8) and pressure sensor (18).
